# EUROPEAN PATENT APPLICATION

(11) **EP 4 391 655 A1**
(43) Date of publication of application: **26.06.2024**
(21) Application number: 23218151.1
(22) Date of filing: 19.12.2023
(51) Int. Cl.: H04W 48/18, H04W 60/00, H04W 88/06

(54) **IMPROVEMENTS TO USER EQUIPMENT MOVING FROM A ONE GENERATION NETWORK TO ANOTHER GENERATION NETWORK**

(30) Priority: 23.12.2022 IN 202221075001; 12.12.2023 US 202318536442
(71) Applicant: MediaTek Singapore Pte. Ltd., Singapore 138628 (SG)
(72) Inventor: Puneet, 560037 Bengaluru (IN); NIEMI, Marko, Oulu (FI)
(74) Representative: Hoefer & Partner Patentanwälte mbB

(57) **Abstract**

In an aspect of the disclosure, a user equipment (104, 710) and a method of performing a radio access technology network change by the user equipment (104, 710) are provided. In certain configurations, the user equipment (104, 710) performs first inter-system change from a first radio access technology network to a second radio access technology network. In response to failing the first inter-system change, the user equipment (104, 710) performs second inter-system change from the second radio access technology network to a third radio access technology network by performing an initial attach procedure or an initial registration procedure in the third radio access technology network.

## Description

### Field of the Invention

The present disclosure relates generally to communication systems, and more particularly, to techniques of methods and apparatuses for improvements to a user equipment (UE) moving from a one-generation network to another generation network.

### Background of the Invention

The statements in this section merely provide background information related to the present disclosure and may not constitute prior art.

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is fifth-generation (5G) New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. Some aspects of 5G NR may be based on the fourth-generation (4G) Long Term Evolution (LTE) standard. There exists a need for further improvements in 5G NR technology. These improvements may also be applicable to other multi-access technologies and the telecommunication standards that employ these technologies.

### Summary of the Invention

This in mind, the present invention aims at providing methods and apparatuses for improvements to a user equipment (UE) moving from a one-generation network to another generation network.

This is achieved by an apparatus and a related method according to independent claims. The dependent claims pertain to corresponding further developments and improvements.

### Brief Description of the Drawings

FIG. 1 is a diagram illustrating an example of a wireless communications system and an access network.
FIG. 2 is a diagram illustrating a base station in communication with a UE in an access network.
FIG. 3 illustrates an example logical architecture of a distributed access network.
FIG. 4 illustrates an example physical architecture of a distributed access network.
FIG. 5 is a diagram showing an example of a DL-centric slot.
FIG. 6 is a diagram showing an example of a LTL-centric slot.
FIG. 7 is a diagram illustrating example network environment for a UE and a PLMN.
FIG. 8 is a flow chart illustrating an example inter-system change procedure from a previous RAT network to a current RAT network.
FIG. 9 is a diagram illustrating examples of inter-system change between 5G and 4G networks.
FIG. 10 is a diagram illustrating an example of inter-system change from a 5G network to a 2G/3G network.
FIG. 11 is a diagram illustrating an example of inter-system change from a 2G/3G network to a 5G network.
FIG. 12 is a flow chart of a method (process) of performing a RAT network change by a UE.

### Detailed Description

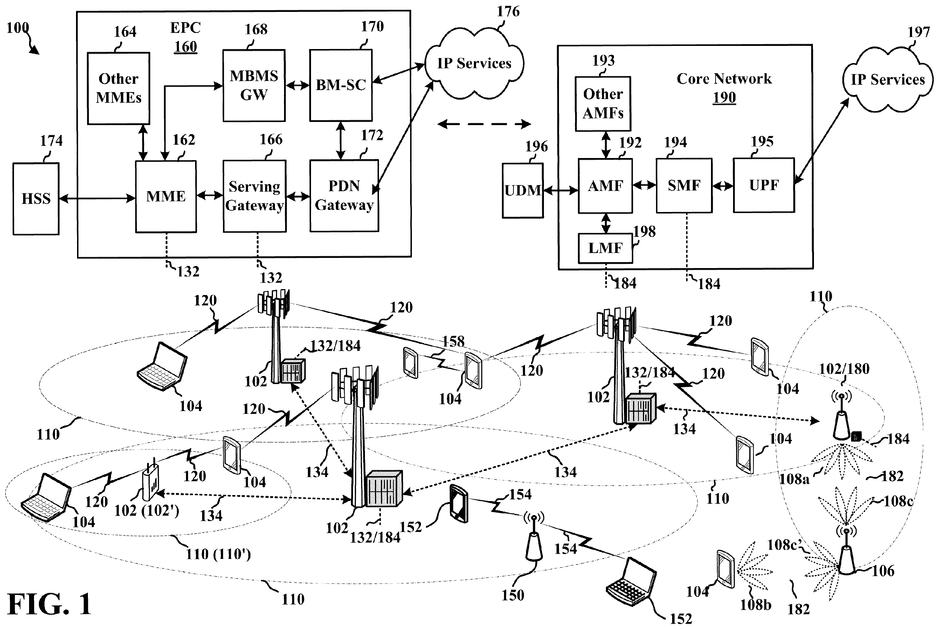

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through backhaul links 132 (e.g., SI interface). The base stations 102 configured for 5G NR (collectively referred to as Next Generation RAN (NG-RAN)) may interface with core network 190 through backhaul links 184. In addition to other functions, the base stations 102 may perform one or more of the following functions: transfer of user data, radio channel ciphering and deciphering, integrity protection, header compression, mobility control functions (e.g., handover, dual connectivity), inter cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over backhaul links 134 (e.g., X2 interface). The backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102/LTEs 104 may use spectrum up to 7 MHz (e.g., 5, 10, 15, 20, 100, 400, etc. MHz) bandwidth per carrier allocated in a carrier aggregation of up to a total of Yx MHz (x component carriers) used for transmission in each direction. The carriers may or may not be adjacent to each other. Allocation of carriers may be asymmetric with respect to DL and LTL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/LTL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152/AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

A base station 102, whether a small cell 102' or a large cell (e.g., macro base station), may include an eNB, gNodeB (gNB), or another type of base station. Some base stations, such as gNB 180 may operate in a traditional sub 6 GHz spectrum, in millimeter wave (mmW) frequencies, and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band (e.g., 3 GHz - 300 GHz) has extremely high path loss and a short range. The mmW base station 180 may utilize beamforming 182 with the UE 104 to compensate for the extremely high path loss and short range.

The base station 180 may transmit a beamformed signal to the UE 104 in one or more transmit directions 108a. The LTE 104 may receive the beamformed signal from the base station 180 in one or more receive directions 108b. The UE 104 may also transmit a beamformed signal to the base station 180 in one or more transmit directions. The base station 180 may receive the beamformed signal from the LTE 104 in one or more receive directions. The base station 180/UE 104 may perform beam training to determine the best receive and transmit directions for each of the base station 180/UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a location management function (LMF) 198, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the SMF 194 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming Service, and/or other IP services.

The base station may also be referred to as a gNB, Node B, evolved Node B (eNB), an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the present disclosure may reference 5G New Radio (NR), the present disclosure may be applicable to other similar areas, such as LTE, LTE-Advanced (LTE-A), Code Division Multiple Access (CDMA), Global System for Mobile communications (GSM), or other wireless/radio access technologies.

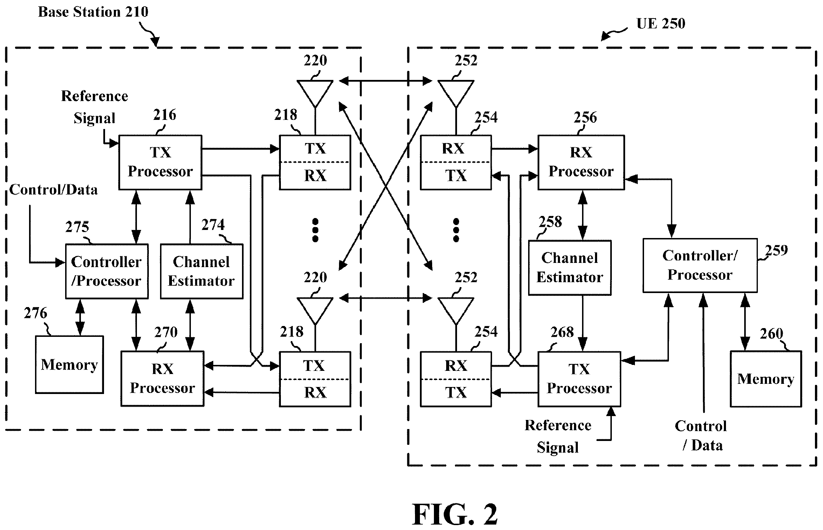

FIG. 2 is a block diagram of a base station 210 in communication with a LTE 250 in an access network. In the DL, IP packets from the EPC 160 may be provided to a controller/processor 275. The controller/processor 275 implements layer 3 and layer 2 functionality. Layer 3 includes a radio resource control (RRC) layer, and layer 2 includes a packet data convergence protocol (PDCP) layer, a radio link control (RLC) layer, and a medium access control (MAC) layer. The controller/processor 275 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 216 and the receive (RX) processor 270 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 216 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 274 may be used to determine the coding and modulation scheme, as well as for spatial processing. The channel estimate may be derived from a reference signal and/or channel condition feedback transmitted by the UE 250. Each spatial stream may then be provided to a different antenna 220 via a separate transmitter 218TX. Each transmitter 218TX may modulate an RF carrier with a respective spatial stream for transmission.

At the UE 250, each receiver 254RX receives a signal through its respective antenna 252. Each receiver 254RX recovers information modulated onto an RF carrier and provides the information to the receive (RX) processor 256. The TX processor 268 and the RX processor 256 implement layer 1 functionality associated with various signal processing functions. The RX processor 256 may perform spatial processing on the information to recover any spatial streams destined for the UE 250. If multiple spatial streams are destined for the UE 250, they may be combined by the RX processor 256 into a single OFDM symbol stream. The RX processor 256 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 210. These soft decisions may be based on channel estimates computed by the channel estimator 258. The soft decisions are then decoded and deinterleaved to recover the data and control signals that were originally transmitted by the base station 210 on the physical channel. The data and control signals are then provided to the controller/processor 259, which implements layer 3 and layer 2 functionality.

The controller/processor 259 can be associated with a memory 260 that stores program codes and data. The memory 260 may be referred to as a computer- readable medium. In the UL, the controller/processor 259 provides demultiplexing between transport and logical channels, packet reassembly, deciphering, header decompression, and control signal processing to recover IP packets from the EPC 160. The controller/processor 259 is also responsible for error detection using an ACK and/or NACK protocol to support HARQ operations.

Similar to the functionality described in connection with the DL transmission by the base station 210, the controller/processor 259 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 258 from a reference signal or feedback transmitted by the base station 210 may be used by the TX processor 268 to select the appropriate coding and modulation schemes, and to facilitate spatial processing. The spatial streams generated by the TX processor 268 may be provided to different antenna 252 via separate transmitters 254TX. Each transmitter 254TX may modulate an RF carrier with a respective spatial stream for transmission. The LTL transmission is processed at the base station 210 in a manner similar to that described in connection with the receiver function at the UE 250. Each receiver 218RX receives a signal through its respective antenna 220. Each receiver 218RX recovers information modulated onto an RF carrier and provides the information to a RX processor 270.

The controller/processor 275 can be associated with a memory 276 that stores program codes and data. The memory 276 may be referred to as a computer- readable medium. In the UL, the controller/processor 275 provides demultiplexing between transport and logical channels, packet reassembly, deciphering, header decompression, control signal processing to recover IP packets from the UE 250. IP packets from the controller/processor 275 may be provided to the EPC 160. The controller/processor 275 is also responsible for error detection using an ACK and/or NACK protocol to support HARQ operations.

New radio (NR) may refer to radios configured to operate according to a new air interface (e.g., other than Orthogonal Frequency Divisional Multiple Access (OFDMA)-based air interfaces) or fixed transport layer (e.g., other than Internet Protocol (IP)). NR may utilize OFDM with a cyclic prefix (CP) on the uplink and downlink and may include support for half-duplex operation using time division duplexing (TDD). NR may include Enhanced Mobile Broadband (eMBB) service targeting wide bandwidth (e.g. 80 MHz beyond), millimeter wave (mmW) targeting high carrier frequency (e.g. 60 GHz), massive MTC (mMTC) targeting non-backward compatible MTC techniques, and/or mission critical targeting ultra-reliable low latency communications (URLLC) service.

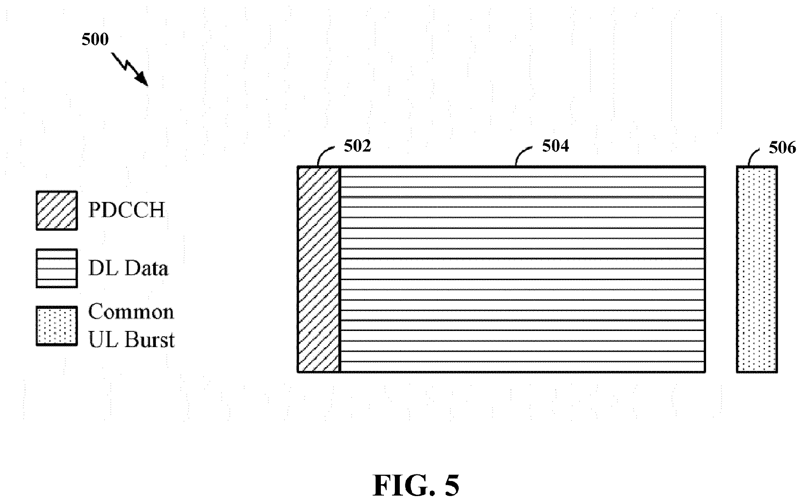

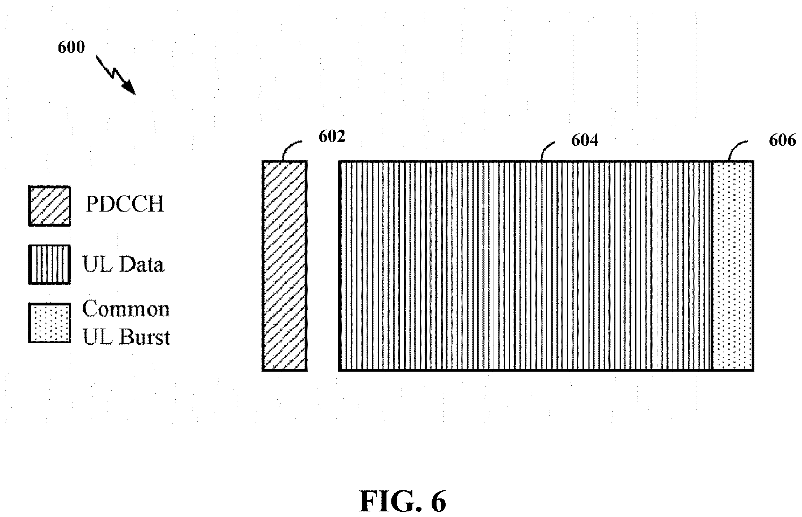

A single component carrier bandwidth of 100 MHz may be supported. In one example, NR resource blocks (RBs) may span 12 sub-carriers with a sub-carrier bandwidth of 60 kHz over a 0.25 ms duration or a bandwidth of 30 kHz over a 0.5 ms duration (similarly, 50MHz BW for 15kHz SCS over a 1 ms duration). Each radio frame may consist of 10 subframes (10, 20, 40 or 80 NR slots) with a length of 10 ms. Each slot may indicate a link direction (i.e., DL or LTL) for data transmission and the link direction for each slot may be dynamically switched. Each slot may include DL/LTL data as well as DL/LTL control data. UL and DL slots for NR may be as described in more detail below with respect to FIGs. 5 and 6.

The NR RAN may include a central unit (CU) and distributed units (DUs). A NR BS (e.g., gNB, 5G Node B, Node B, transmission reception point (TRP), access point (AP)) may correspond to one or multiple BSs. NR cells can be configured as access cells (ACells) or data only cells (DCells). For example, the RAN (e.g., a central unit or distributed unit) can configure the cells. DCells may be cells used for carrier aggregation or dual connectivity and may not be used for initial access, cell selection/reselection, or handover. In some cases DCells may not transmit synchronization signals (SS) in some cases DCells may transmit SS. NR BSs may transmit downlink signals to UEs indicating the cell type. Based on the cell type indication, the UE may communicate with the NR BS. For example, the UE may determine NR BSs to consider for cell selection, access, handover, and/or measurement based on the indicated cell type.

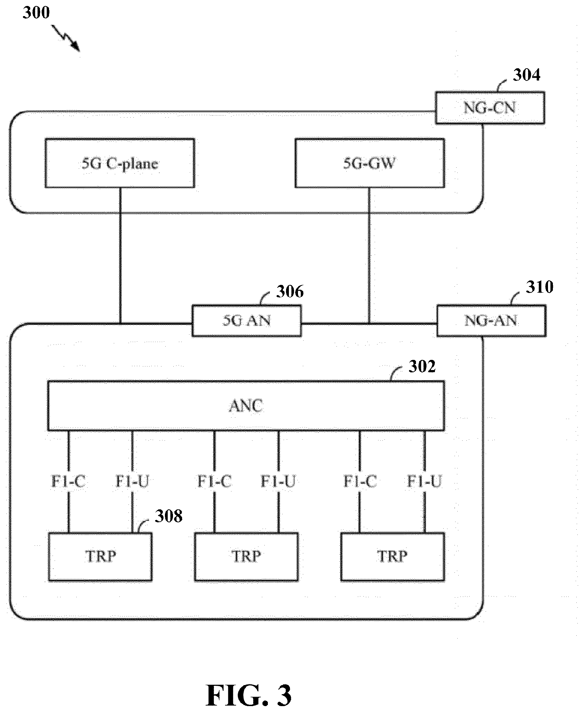

FIG. 3 illustrates an example logical architecture of a distributed RAN 300, according to aspects of the present disclosure. A 5G access node 306 may include an access node controller (ANC) 302. The ANC may be a central unit (CU) of the distributed RAN. The backhaul interface to the next generation core network (NG- CN) 304 may terminate at the ANC. The backhaul interface to neighboring next generation access nodes (NG-ANs) 310 may terminate at the ANC. The ANC may include one or more TRPs 308 (which may also be referred to as BSs, NR BSs, Node Bs, 5G NBs, APs, or some other term). As described above, a TRP may be used interchangeably with "cell."

The TRPs 308 may be a distributed unit (DU). The TRPs may be connected to one ANC (ANC 302) or more than one ANC (not illustrated). For example, for RAN sharing, radio as a service (RaaS), and service specific ANC deployments, the TRP may be connected to more than one ANC. A TRP may include one or more antenna ports. The TRPs may be configured to individually (e.g., dynamic selection) or jointly (e.g., joint transmission) serve traffic to a UE.

The local architecture of the distributed RAN 300 may be used to illustrate fronthaul definition. The architecture may be defined that support fronthauling solutions across different deployment types. For example, the architecture may be based on transmit network capabilities (e.g., bandwidth, latency, and/or jitter). The architecture may share features and/or components with LTE. According to aspects, the next generation AN (NG-AN) 310 may support dual connectivity with NR. The NG-AN may share a common fronthaul for LTE and NR.

The architecture may enable cooperation between and among TRPs 308. For example, cooperation may be preset within a TRP and/or across TRPs via the ANC 302. According to aspects, no inter-TRP interface may be needed/present.

According to aspects, a dynamic configuration of split logical functions may be present within the architecture of the distributed RAN 300. The PDCP, RLC, MAC protocol may be adaptably placed at the ANC or TRP.

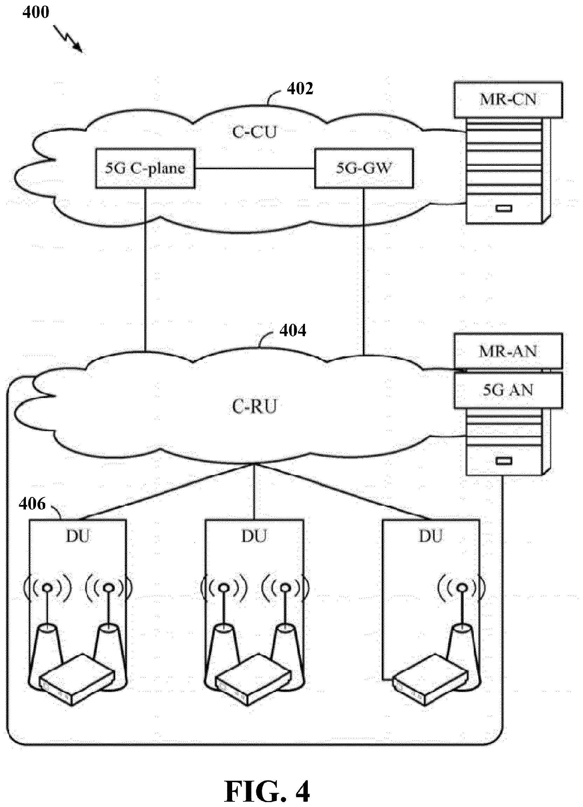

FIG. 4 illustrates an example physical architecture of a distributed RAN 400, according to aspects of the present disclosure. A centralized core network unit (C-CU) 402 may host core network functions. The C-CU may be centrally deployed. C-CU functionality may be offloaded (e.g., to advanced wireless services (AWS)), in an effort to handle peak capacity. A centralized RAN unit (C-RU) 404 may host one or more ANC functions. Optionally, the C-RU may host core network functions locally. The C-RU may have distributed deployment. The C-RU may be closer to the network edge. A distributed unit (DU) 406 may host one or more TRPs. The DU may be located at edges of the network with radio frequency (RF) functionality.

FIG. 5 is a diagram 500 showing an example of a DL-centric slot. The DL-centric slot may include a control portion 502. The control portion 502 may exist in the initial or beginning portion of the DL-centric slot. The control portion 502 may include various scheduling information and/or control information corresponding to various portions of the DL-centric slot. In some configurations, the control portion 502 may be a physical DL control channel (PDCCH), as indicated in FIG. 5. The DL-centric slot may also include a DL data portion 504. The DL data portion 504 may sometimes be referred to as the payload of the DL-centric slot. The DL data portion 504 may include the communication resources utilized to communicate DL data from the scheduling entity (e.g., LTE or BS) to the subordinate entity (e.g., LTE). In some configurations, the DL data portion 504 may be a physical DL shared channel (PDSCH).

The DL-centric slot may also include a common LTL portion 506. The common LTL portion 506 may sometimes be referred to as a UL burst, a common UL burst, and/or various other suitable terms. The common UL portion 506 may include feedback information corresponding to various other portions of the DL-centric slot. For example, the common LTL portion 506 may include feedback information corresponding to the control portion 502. Non-limiting examples of feedback information may include an ACK signal, a NACK signal, a HARQ indicator, and/or various other suitable types of information. The common UL portion 506 may include additional or alternative information, such as information pertaining to random access channel (RACH) procedures, scheduling requests (SRs), and various other suitable types of information.

As illustrated in FIG. 5, the end of the DL data portion 504 may be separated in time from the beginning of the common UL portion 506. This time separation may sometimes be referred to as a gap, a guard period, a guard interval, and/or various other suitable terms. This separation provides time for the switch-over from DL communication (e.g., reception operation by the subordinate entity (e.g., UE)) to UL communication (e.g., transmission by the subordinate entity (e.g., UE)). One of ordinary skill in the art will understand that the foregoing is merely one example of a DL-centric slot and alternative structures having similar features may exist without necessarily deviating from the aspects described herein.

FIG. 6 is a diagram 600 showing an example of a UL-centric slot. The UL-centric slot may include a control portion 602. The control portion 602 may exist in the initial or beginning portion of the UL-centric slot. The control portion 602 in FIG. 6 may be similar to the control portion 502 described above with reference to FIG. 5. The UL-centric slot may also include a UL data portion 604. The UL data portion 604 may sometimes be referred to as the pay load of the LTL-centric slot. The LTL portion may refer to the communication resources utilized to communicate UL data from the subordinate entity (e.g., UE) to the scheduling entity (e.g., UE or BS). In some configurations, the control portion 602 may be a physical DL control channel (PDCCH).

As illustrated in FIG. 6, the end of the control portion 602 may be separated in time from the beginning of the LTL data portion 604. This time separation may sometimes be referred to as a gap, guard period, guard interval, and/or various other suitable terms. This separation provides time for the switch-over from DL communication (e.g., reception operation by the scheduling entity) to LTL communication (e.g., transmission by the scheduling entity). The LTL-centric slot may also include a common UL portion 606. The common UL portion 606 in FIG. 6 may be similar to the common LTL portion 506 described above with reference to FIG. 5. The common UL portion 606 may additionally or alternatively include information pertaining to channel quality indicator (CQI), sounding reference signals (SRSs), and various other suitable types of information. One of ordinary skill in the art will understand that the foregoing is merely one example of a LTL-centric slot and alternative structures having similar features may exist without necessarily deviating from the aspects described herein.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., UE or BS), even though the scheduling entity may be utilized for scheduling and/or control purposes. In some examples, the sidelink signals may be communicated using a licensed spectrum (unlike wireless local area networks, which typically use an unlicensed spectrum).

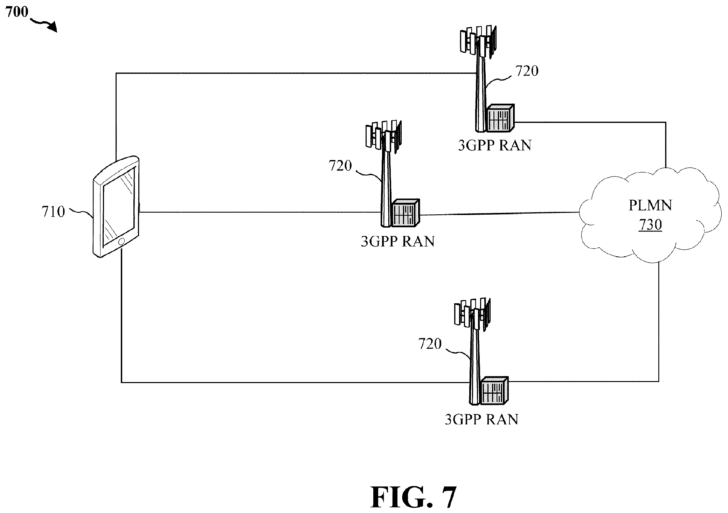

FIG. 7 is a diagram illustrating an example network environment for a LTE and a PLMN. The network environment 700 includes a LTE 710, a plurality of 3GPP radio access network (RANs) 720, and a PLMN 730. Each of the 3GPP RANs 720 may provide radio access for the UE 710 via a corresponding RAT network. Examples of the RAT networks include a 5G NR network, a 4G long-term evolution (LTE) network, a third-generation (3G) network such as a Universal Mobile Telecommunications System (UMTS) Terrestrial RAN (UTRAN), or a second-generation (2G) network such as a Global System for Mobile Communications (GSM) Enhanced Data rats for GSM Evolution (EDGE) RAN (GERAN). In this case, the UE 710 may support communications with all the 3GPP RANs 720 in different RAT networks, and the UE 710 may be equipped with multiple RF transceivers for different application services via different RAT networks. In this case, the LTE 710 may be connected to the PLMN 730 through one or more of the 3GPP RANs 720, and is thus allowed to move among the different RAT networks.

In certain configurations, if the network environment 700 supports N26 interface, which is an interface interconnecting the 5G Core network function AMF with 4G network node MME, it enables interworking between 5G to 4G networks. In this case, the 4G network and the 5G network support interworking, and when the UE 710 moves between the 4G/5G network, there is no need for the UE 710 to perform an initial registration/attach procedure. For example, in the case where the UE 710 is registered in the 5G network, the UE 710 is also considered in the registered state in the 4G network. When the LTE 710 intends to move from the 5G network to the 4G network, the UE 710 may perform a tracking area update (TAU) procedure in the 4G network without performing the initial attach procedure. On the other hand, when the UE 710 moves from the 4G network to the 5G network, the LTE 710 may perform a mobility registration update (MRU) procedure in the 5G network without performing the initial attach procedure.

Similarly, in the case where the UE 710 is registered in a 2G/3G network, the UE 710 is also considered in the registered state in the 4G network. Thus, when the LTE 710 intends to move from the 2G/3G network to the 4G network, the UE 710 may perform the TAU procedure in the 4G network without performing the initial attach procedure, assuming that the network knows the LTE 710. On the other hand, if the LTE is registered in the 4G network and intends to move to the 2G/3G network, the UE 710 may perform a location area update (LAU) procedure or a routing area update (RAU) procedure without performing the initial attach procedure.

However, the 2G/3G network and the 5G network do not support interworking. In this case, the UE 710 may need to perform an initial registration/attach procedure if the UE 710 moves from the 2G/3G network to the 5G network and if the UE 710 performed a GMM attach procedure or the LAU/RAU procedure while in the 2G/3G mode. For example, as per the 3GPP Technical Specification (TS) 24.501, when the UE 710 moves from the GERAN (i.e., 2G network) or from a UTRAN (i.e., 3G network) to a Next Generation (NG) RAN, the UE 710 may initiate a GPRS attach or the RAU procedure while in an A/Gb mode, which is a mode of operation of the mobile station (MS) when connected to the Core Network via GERAN and the A and/or Gb interfaces, or an Iu mode, which is a mode of operation of the MS when connected to the Core Network via GERAN or UTRAN and the Iu interface.

However, in the case where the LTE 710 is registered over the 2G/3G network (and is thus also registered in the 4G network) and intends to move from the 2G/3G network to the 5G network, and the UE 710 has performed the GMM attach procedure or the RAU procedure while in the 2G/3G mode, when the UE 710 performs the initial registration procedure in the 5G network, the initial registration procedure may fail (which may be due to no response from the 5G network, a lower layer failure in the 5G network, or a minor cause rejection from the 5G network). On the other hand, the initial registration procedure in the 5G network also causes the UE 710 to switch from the registered state to the detach (i.e., de-registered) state in the 2G/3G network. In this case, the UE 710 may increment a registration attempt counter to indicate such failure of the initial registration process, and perform a second attempt of the initial registration procedure. Before the second attempt, the UE 710 may move to the 4G network (e.g., the LTE RAN). Since the UE 710 is already in the registered state in the 4G network, the enterprise mobile management (EMM) on the UE 710 may trigger the 4G TAU procedure instead of the initial 4G attach procedure. In this case, the 4G network may reject the 4G TAU procedure because there are no active contexts present in the 5G network, which is due to the 5G initial registration procedure being unsuccessful before the inter RAT (IRAT) handover procedure from the 5G network to the 4G network.

Similarly, in the case where the LTE 710 is registered over the 5G network (and is thus also registered in the 4G network) and intends to move from the 5G network to the 2G/3G network, the UE 710 will perform a GMM attach procedure (as an initial attach procedure) in the 2G/3G network. In this case, the initial attach procedure may fail (which may be due to no response from the 2G/3G network, a lower layer failure in the 2G/3G network, or a minor cause rejection from the 2G/3G network). On the other hand, the initial attach procedure in the 2G/3G network also causes the UE 710 to switch from the registered state to the de-registered state in the 5G network. In this case, the UE 710 may increment an attach attempt counter to indicate such failure of the initial attach process, and perform a second attempt of the initial attach procedure. Before the second attempt, the UE 710 may move to the 4G network (e.g., the LTE RAN). Since the UE 710 is already in the registered state in the 4G network, the enterprise mobile management (EMM) on the UE 710 may trigger the 4G TAU procedure instead of the initial 4G attach procedure. In this case, the 4G network may reject the 4G TAU procedure because there are no active contexts present in the 2G/3G network, which is due to the 2G/3G initial attach procedure being unsuccessful before the IRAT handover procedure from the 5G network to the 4G network.

Due to the aforementioned deficiencies, one aspect of the present disclosure proposes a scheme for improvements to the LTE moving from one RAT network to another RAT network. Specifically, the LTE may need to memorize whether it has moved indirectly or directly from a first system (e.g., the previous RAT network) to a second system (e.g., the current RAT network). In certain configurations, when the two systems, i.e., the previous RAT network and the current RAT network, support interworking or mobility between the networks, there is no need for the initial registration/attach procedure, and the UE may attempt an update procedure in the current network (which is the destination system). Examples of the update procedure includes the LAU, RAU, TAU or MRU procedures. On the other hand, if the UE determines that it does not move directly from the first system to the second system, e.g., the UE moves firstly from the first system to a third system (i.e., an intermediate RAT network) and then moves from the third system to the second system, the UE may be provided with predefined criteria such that the UE performs a different procedure, e.g., an initial registration procedure or initial attach procedure, in the destination system.

In certain configuration, the UE may utilize an attempt counter to memorize whether it has moved indirectly or directly from the previous RAT network to the current RAT network. Specifically, when the UE moves from one RAT network to another RAT network (e.g., the current RAT network) and performs a corresponding procedure (which may be an update procedure or an initial registration/attach procedure) in the current RAT network, the corresponding procedure may succeed in the current RAT network such that there is no need to move to from the current RAT network to a further RAT network, and in this case, the UE moves to the current RAT network directly. Alternatively, the corresponding procedure may fail in the current RAT network such that there is a need to move to from the current RAT network to a further RAT network, and in this case, the UE moves from the previous RAT network to the further RAT network indirectly (i.e., via the current RAT network). Thus, the UE may set up an attempt counter, in which the LTE increments the attempt counter when the corresponding procedure fails, and whenever the corresponding procedure is performed successfully, the UE resets the attempt counter. Thus, when the UE moves to a new RAT network, the UE may check the value of the attempt counter to determine whether a previous failure in the corresponding procedure has occurred. If there was no previous failure (e.g., the value of the attempt counter is zero or the attempt counter has been reset), the UE moves to the RAT network directly. If there was a previous failure (e.g., the value of the attempt counter is non-zero), the UE moves to the RAT network indirectly.

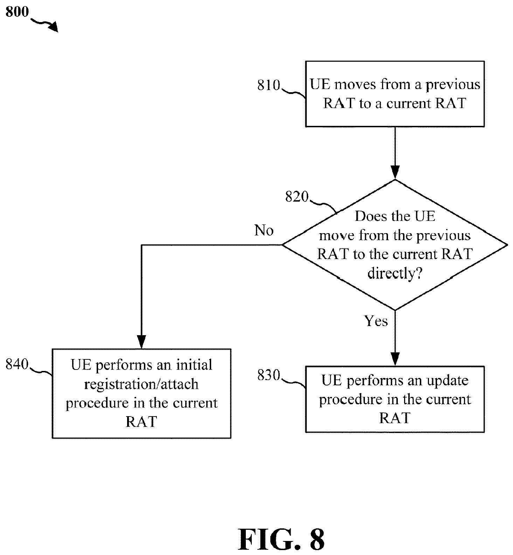

FIG. 8 is a flow chart illustrating an example inter-system change procedure from a previous RAT network to a current RAT network. The inter-system change procedure 800 may be performed by a LTE (e.g., the LTE 710). At operation 810, the LTE moves from the previous RAT network to the current RAT network. At operation 820, the UE determines whether the UE moves from the previous RAT network to the current RAT network directly. If the LTE moves to the current RAT network directly, at operation 830, the UE performs an update procedure (e.g., the LAU, RAU, TAU or MRU procedures) in the current RAT network. On the other hand, if the LTE moves to the current RAT network indirectly, at operation 840, the LTE performs an initial registration/attach procedure in the current RAT.

In certain configurations, when the UE moves between the 4G network and the 2G/3G network, the following cases may apply. (1) If the UE moves directly from the 4G network to the 2G/3G network, the UE may attempt a mobility update procedure (e.g., LAU/RAU) in the 2G/3G network. (2) If the UE moves indirectly from the 4G network to the 2G/3G network, e.g. via the 5G network (by performing unsuccessful initial registration in the 5G network), the UE performs an initial attach procedure in the 2G/3G network. (3) If the UE moves directly from the 2G/3G network to the 4G network, the LTE may attempt a TAU procedure in the 4G network. (4) If the LTE moves indirectly from the 2G/3G network to the 4G network, e.g. via the 5G network (by performing unsuccessful initial registration in the 5G network), the LTE performs an initial attach procedure in the 4G network.

In certain configurations, if the UE moves from the 5G network (e.g., in a N1 mode, which is a mode of the UE allowing access to the 5G core network via the 5G access network) to the 2G/3G network (e.g., in the A/Gb mode or the Iu mode) and initiates a GPRS attach procedure in the 2G/3G network, and if the UE further moves from the 2G/3G network to the 4G network, the UE performs the EMM attach procedure (i.e., the initial attach procedure) in the 4G network/cell.

In certain configurations, if the UE moves from the A/Gb mode or the Iu mode (i.e., 2G/3G) to the coverage of an EUTRAN network, the UE perform the EMM attach procedure. Then, the UE may visit NG RAN and initiates an initial registration procedure while in the 5G NR mode.

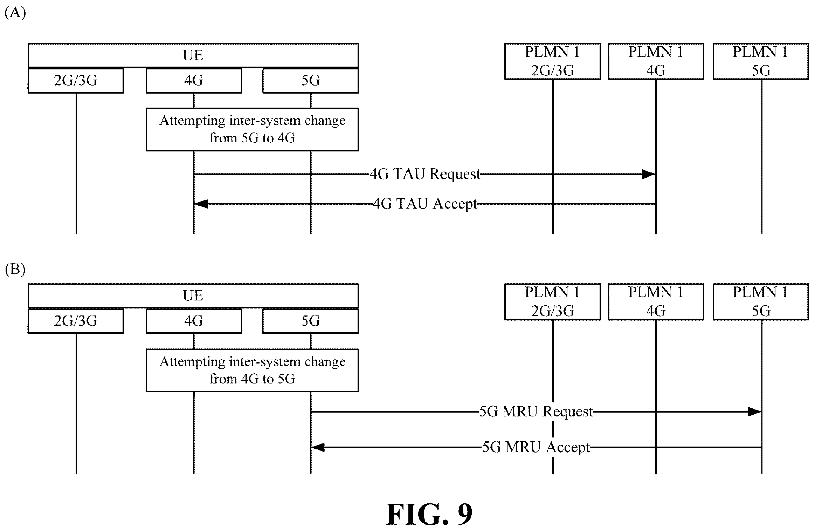

FIG. 9 is a diagram illustrating examples of inter-system change between 5G and 4G networks. As shown in FIG. 9(A), when the UE (e.g., the UE 710) is in the 5G network, the UE may be in the registered state in the 5G network and the 4G network. When the UE attempts an inter-system change from the 5G network to the 4G network, the UE may determine whether this inter-system change is direct by the inter-system change procedure as shown in FIG. 8. Since there is no attempt counter (i.e., no previous registration/attach failure), the UE determines that the UE moves directly from the 5G network to the 4G network (i.e., without via another RAT network), the UE may perform a 4G TAU procedure by sending a 4G TAU request to the 4G network. In this case, the 4G network may return a notification to accept the 4G TAU request.

As shown in FIG. 9(B), when the UE is registered in the 4G network, the UE may be in the registered state in the 4G network and the 5G network. When the UE attempts an inter-system change from the 4G network to the 5G network, the UE may determine whether this inter-system change is direct by the inter-system change procedure as shown in FIG. 8. Since there is no attempt counter (i.e., no previous registration/attach failure), the UE determines that the UE moves directly from the 4G network to the 5G network (i.e., without via another RAT network). Thus, the UE may perform a 5G MRU procedure by sending a 5G MRU request to the 5G network. In this case, the 5G network may return a notification to accept the 5G TAU request.

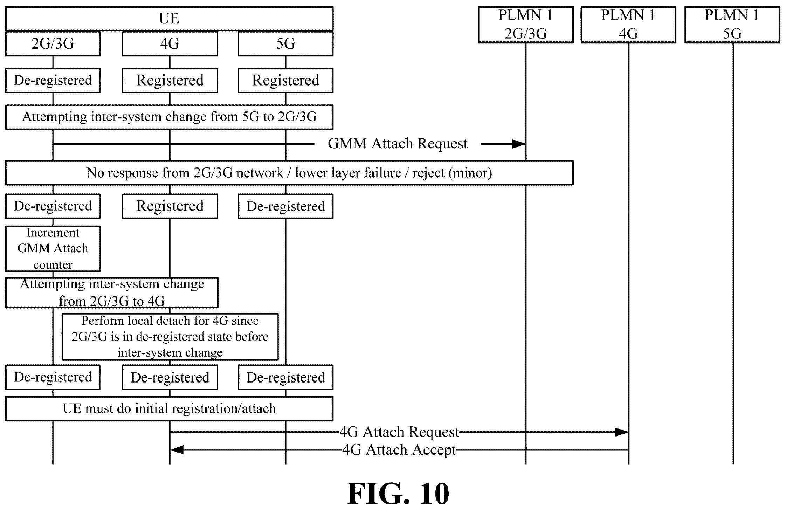

FIG. 10 is a diagram illustrating an example of inter-system change from a 5G network to a 2G/3G network. As shown in FIG. 10, when the UE (e.g., the UE 710) is in the 5G network, the UE may be in the registered state in the 5G network and the 4G network, but not in the 2G/3G network. When the UE attempts an inter-system change from the 5G network to the 2G/3G network, the LTE may perform the inter-system change procedure by performing a GMM attach procedure (i.e., an initial attach procedure) in the 2G/3G network, as the 5G network and the 2G/3G network do not support interworking. Specifically, the UE sends a GMM attach request to the 2G/3G network to initiate the inter-system change to the 2G/3G network. In this case, the GMM attach procedure will fail due to the UE not receiving a response for the GMM attach request from the 2G/3G network, or the LTE receiving a lower layer failure notification or a minor cause rejection from the 2G/3G network. Further, the GMM attach request causes the UE to switch from the registered state to the de-registered state in the 5G network. In other words, the UE is now in the registered state (i.e., the attach state) in the 4G network only. With the failure of the GMM attach procedure, the UE increments the GMM attach counter (i.e., the attempt counter) to record the failure. Then, the UE may attempt another inter-system change from the 2G/3G network to the 4G network. In this case, the UE may determine whether this inter-system change is direct by the inter-system change procedure as shown in FIG. 8. Since the attempt counter indicates the previous attach failure, the UE determines that the UE moves indirectly to the 4G network (i.e., via the 2G/3G network), and the LTE has to do an initial registration/attach procedure in the 4G network. Since the 2G/3G network is in the de-registered state before the inter-system change, the UE may perform a local detach procedure for the 4G network, such that the UE becomes in the de-registered state (i.e., the detach state) in the 4G network. Then, the UE may perform a 4G attach procedure (i.e., the initial attach procedure) in the 4G network by sending a 4G attach request to the 4G network. In response to the 4G attach request, the 4G network will return a notification to accept the 4G attach request, thus successfully completing the 4G attach procedure in the 4G network.

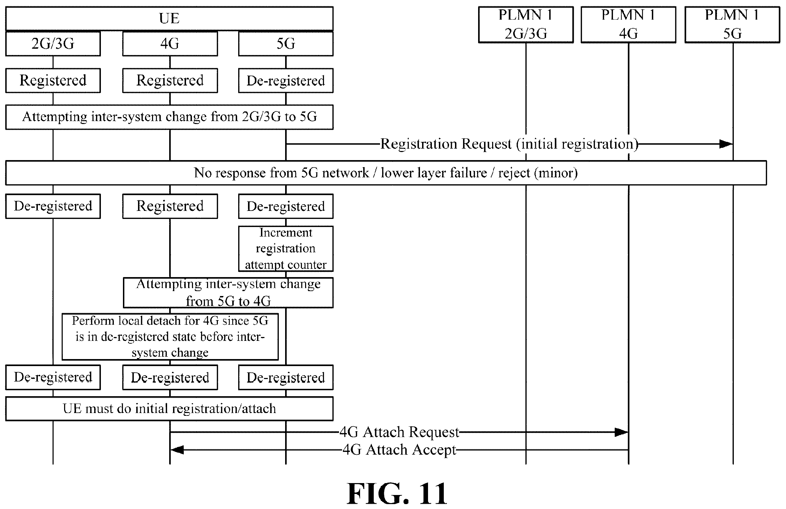

FIG. 11 is a diagram illustrating an example of inter-system change from a 2G/3G network to a 5G network. As shown in FIG. 11, when the LTE (e.g., the LTE 710) is in the 2G/3G network, the UE may be in the registered state in the 2G/3G network and the 4G network, but not in the 5G network. When the UE attempts an inter-system change from the 2G/3G network to the 5G network, the LTE may perform the inter-system change procedure by performing a 5G registration procedure (i.e., an initial registration procedure) in the 5G network, as the 5G network and the 2G/3G network do not support interworking. Specifically, the UE sends a 5G registration request to the 5G network to initiate the inter-system change to the 5G network. In this case, the 5G registration procedure will fail due to the UE not receiving a response for the 5G registration request from the 5G network, or the UE receiving a lower layer failure notification or a minor cause rejection from the 5G network. Further, the 5G registration request causes the UE to switch from the registered state to the de-registered state in the 2G/3G network. In other words, the LTE is now in the registered state (i.e., the attach state) in the 4G network only. With the failure of the 5G registration procedure, the UE increments the registration attempt counter (i.e., the attempt counter) to record the failure. Then, the UE may attempt another inter-system change from the 5G network to the 4G network. In this case, the UE may determine whether this inter-system change is direct by the inter-system change procedure as shown in FIG. 8. Since the attempt counter indicates the previous 5G registration failure, the UE determines that the LTE moves indirectly to the 4G network (i.e., via the 5G network), and the LTE has to do an initial registration/attach procedure in the 4G network. Since the 5G network is in the de-registered state before the inter-system change, the UE may perform a local detach procedure for the 4G network, such that the UE becomes in the de-registered state (i.e., the detach state) in the 4G network. Then, the UE may perform a 4G attach procedure (i.e., the initial attach procedure) in the 4G network by sending a 4G attach request to the 4G network. In response to the 4G attach request, the 4G network will return a notification to accept the 4G attach request, thus successfully completing the 4G attach procedure in the 4G network.

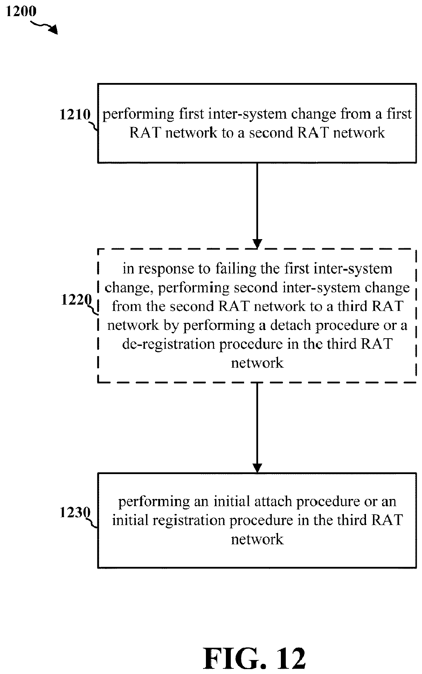

FIG. 12 is a flow chart of a method (process) of performing a RAT network change by a UE. The method may be performed by a UE, e.g., the UE 710. At operation 1210, the UE performs first inter-system change from a first RAT network to a second RAT network. In response to failing the first inter-system change, at operation 1220, the LTE performs second inter-system change from the second RAT network to a third RAT network by optionally performing a detach procedure or a de-registration procedure in the third RAT network. At operation 1230, the LTE further performs the second inter-system change by performing an initial attach procedure or an initial registration procedure in the third RAT network.

In certain configurations, the UE is in a registered state or an attached state in the first RAT network prior to performing the first inter-system change. The UE is switched from the registered state or the attached state to a de-registered state or a detached state in the first RAT network in performing the first inter-system change.

In certain configurations, the first inter-system change is expected to fail when the first RAT network and the second RAT network do not support interworking, and the first inter-system change is expected to succeed when the first RAT network and the second RAT network support interworking.

In certain configurations, the first RAT network and the second RAT network support interworking, and the first inter-system change includes: performing a MRU procedure or a TAU procedure in the second RAT network.

In certain configurations, the first RAT network and the second RAT network do not support interworking, and the first inter-system change comprises: initiating a first initial registration procedure or a first initial attach procedure in the second RAT network. The second inter-system change does not include performing a MRU procedure or a TAU procedure in the third RAT network.

In certain configurations, the second inter-system change further comprises: in response to failing the first initial registration procedure or the first initial attach procedure, incrementing an attempt counter. The UE performs the detach procedure or the de-registration procedure in the third RAT network in response to the increment of the attempt counter.

## Claims

1. A method of performing a radio access technology network change by a user equipment (104, 710), the method being **characterized by** comprising:
performing first inter-system change from a first radio access technology network to a second radio access technology network; and
in response to failing the first inter-system change, performing second inter-system change from the second radio access technology network to a third radio access technology network by:
performing an initial attach procedure or an initial registration procedure in the third radio access technology network.

2. The method of claim 1, **characterized in that** the user equipment (104, 710) is in a registered state or an attached state in the first radio access technology network prior to performing the first inter-system change.

3. The method of claim 2, **characterized in that** the user equipment (104, 710) is switched from the registered state or the attached state to a de-registered state or a detached state in the first radio access technology network in performing the first inter-system change.

4. The method of any of claims 1 to 3, **characterized in that** the second inter-system change further comprises:
prior to performing the initial attach procedure or the initial registration procedure in the third radio access technology network, performing a detach procedure or a de-registration procedure in the third radio access technology network.

5. The method of any of claims 1 to 4, **characterized in that** the first inter-system change is expected to fail when the first radio access technology network and the second radio access technology network do not support interworking, and the first inter-system change is expected to succeed when the first radio access technology network and the second radio access technology network support interworking.

6. The method of claim 5, **characterized in that** the first radio access technology network and the second radio access technology network support interworking, and the first inter-system change includes:
performing a mobility registration update procedure or a tracking area update procedure in the second radio access technology network.

7. The method of claim 5, **characterized in that** the first radio access technology network and the second radio access technology network do not support interworking, and the first inter-system change comprises:
initiating a first initial registration procedure or a first initial attach procedure in the second radio access technology network.

8. The method of claim 7, **characterized in that** the first inter-system change fails in response to:
the user equipment (104, 710) not receiving a response from the second radio access technology network;
the user equipment (104, 710) receiving a lower layer failure notification responding to the first initial registration procedure or the first initial attach procedure; or
the user equipment (104, 710) receiving a rejection for the first initial registration procedure or the first initial attach procedure from the second radio access technology network.

9. The method of claim 7, **characterized in that** the second inter-system change further comprises:
in response to failing the first initial registration procedure or the first initial attach procedure, incrementing an attempt counter;
wherein the user equipment (104, 710) performs the detach procedure or the de-registration procedure in the third radio access technology network in response to the increment of the attempt counter.

10. An apparatus for wireless communication, the apparatus being a user equipment (104, 710) and **characterized by** comprising:
a memory; and
at least one processor coupled to the memory, the processor being configured to:
perform first inter-system change from a first radio access technology network to a second radio access technology network; and
in response to failing the first inter-system change, perform second inter-system change from the second radio access technology network to a third radio access technology network by:
performing an initial attach procedure or an initial registration procedure in the third radio access technology network.

11. The apparatus of claim 10, **characterized in that** the user equipment (104, 710) is in a registered state or an attached state in the first radio access technology network prior to performing the first inter-system change, and the user equipment (104, 710) is switched from the registered state or the attached state to a de-registered state or a detached state in the first radio access technology network in performing the first inter-system change.

12. The apparatus of any of claims 10 to 11, **characterized in that** the second inter-system change further comprises:
prior to performing the initial attach procedure or the initial registration procedure in the third radio access technology network, performing a detach procedure or a de-registration procedure in the third radio access technology network.

13. The apparatus of any of claims 10 to 12, **characterized in that** the first inter-system change is expected to fail when the first radio access technology network and the second radio access technology network do not support interworking, and the first inter-system change is expected to succeed when the first radio access technology network and the second radio access technology network support interworking.

14. The apparatus of claim 13, **characterized in that** the first radio access technology network and the second radio access technology network support interworking, and the first inter-system change includes:
performing a mobility registration update procedure or a tracking area update procedure in the second radio access technology network.

15. The apparatus of claim 13, **characterized in that** the first radio access technology network and the second radio access technology network do not support interworking, and the first inter-system change comprises:
initiating a first initial registration procedure or a first initial attach procedure in the second radio access technology network.
